# EUROPÄISCHE PATENTSCHRIFT

(11) **EP 0 553 383 B1**
(45) Veröffentlichungstag und Bekanntmachung des Hinweises auf die Patenterteilung: **16.10.1996**
(21) Anmeldenummer: 92101607.7
(22) Anmeldetag: 31.01.1992
(51) Int. Cl.: B60R 22/46, B60R 22/28

(54) **Gurtstraffer in einem Rückhaltesystem für Fahrzeuginsassen**
Belt tensioner in a vehicle occupant restraint system
Tendeur de sangle dans un système de retenue pour occupants de véhicules

(43) Veröffentlichungstag der Anmeldung: 04.08.1993
(73) Patentinhaber: TRW Occupant Restraint Systems GmbH, D-73553 Alfdorf (DE)
(72) Erfinder: Schmid, Johannes, W-7070 SchwäbischGmünd-Hussenhofen (DE); Mödinger, Thomas, W-7077 Vordersteinenberg (DE)
(74) Vertreter: Degwert, Hartmut, Dipl.-Phys.

(56) Entgegenhaltungen:
- EP-A- 0 237 503
- EP-A- 0 264 016
- DE-A- 2 223 061
- DE-A- 3 229 260
- DE-A- 3 331 696

## Beschreibung

Die Erfindung betrifft einen Gurtstraffer in einem Rückhaltesystem für Fahrzeuginsassen, mit einer einen Schlitz für den Durchgang des Gurtbandes aufweisenden Haspel, die an ihrem Außenumfang mit einer Verzahnung versehen ist, und einem am Fahrzeugaufbau befestigbaren Gehäuse, das eine erste Wand mit einer Verzahnung aufweist, entlang welcher die Verzahnung der Haspel formschlüssig abwälzbar ist, und einem Linearantrieb, der durch einen Auprall des Fahrzeugs aktivierbar ist und dessen Linearbewegung in eine Drehbewegung der Haspel umgesetzt wird.

Ein Gurtstraffer dieser Bauart ist aus der DE-PS 32 49 729 und der DE-A-32 29 60 bekannt. Er weist den Vorzug auf, daß in dem Sicherheitsgurt-Rückhaltesystem ein gewöhnlicher Gurtaufroller verwendet werden kann. Eine Integration in vorhandene Systeme ist verhältnismäßig leicht möglich, da der Gurtbandverlauf unverändert bleibt.

Bei dem aus der DE-A-32 29 260 bekannten Gurtstraffer erfolgt die Umsetzung der Linearbewegung des Linearantriebs in die Drehbewegung der Haspel über Zugseile, die mit einem Ende in Seilrillen von der Haspel zugeordneten Seilscheiben aufgenommen und befestigt sind. Die Haspel ist über Lagerzapfen in Längsschlitzen einnander gegenüberliegender Seitenwände des Gehäuses geführt.

Aus der DE-A-33 31 696 ist eine Sicherheitsgurtanordnung bekannt, die mit einer Gurtklemm- und Gurtspannvorrichtung versehen ist, bei der die Linearbewegung einer verschiebbaren Platte dadurch in eine Drehbewegung einer am Gurtband angreifenden Walze umgesetzt wird, daß an den beiden Walzenenden vorgesehene Zugseile mit einem Ende an der verschiebbaren Platte und am anderen Ende am die Walze aufnehmenden Gehäuse befestigt sind. Jedes der Zugseile ist ausgehend von der verschiebbaren Platte zunächst um einen Teil des Umfangs der Walze, anschließend durch eine diametral durch die Walze verlaufende Querbohrung und dann um einen weiteren Teil des Umfangs der Walze geführt. Anstelle der Verschiebeplatte kann eine mit einem an der Walze vorgesehenen Zahnrad zusammenwirkende Zahnstange vorgesehen sein. Die Walze ist an den Enden in im Gehäuse vorgesehenen Schlitzen geführt.

Der Erfindung liegt die Aufgabe zugrunde, einen Gurtstraffer der angegebenen Art dahingehend weiterzubilden, daß für einen gegebenen Hub des verfügbaren Linearantriebs eine Straffung des Gurtbandes um eine relativ große Gurtbandlänge erreicht wird und durch leichtgängige Lagerung und Führung der Haspel geringe Leistungsverluste bei der Straffung eintreten. Es wird dabei auch angestrebt, mit wenigen, einfach herstellbaren Bauteilen auszukommen, die einfach montiert werden können, um so ein insgesamt kostengünstiges System zur Verfügung stellen zu können.

Diese Aufgabe wird bei einem Gurtstraffer der eingangs angegebenen Art erfindungsgemäß dadurch gelöst, daß entlang einer zweiten, zur ersten parallelen und von ihr beabstandeten Wand des Gehäuses eine Antriebsplatte verschiebbar angeordnet ist, die auf ihrer der Haspel zugekehrten Seite eine Verzahnung aufweist, mit der die Verzahnung der Haspel formschlüssig in Eingriff steht, daß der Linearantrieb an der Antriebsplatte angreift und daß die allgemein walzenförmige Haspel (54) lose zwischen den Verzahnungen der ersten und der zweiten Wand und in Kämmeingriff mit diesen im Gehäuse angeordnet ist. Bei dem erfindungsgemäßen Gurtstraffer wird durch das Zusammenwirken der Verzahnungen zwischen Haspel, Antriebsplatte und Verzahnung an der gegenüberliegenden Wand des Gehäuses eine Umsetzung der Linearbewegung des Linearantriebs in eine Drehbewegung der Haspel über einen relativ großen Drehwinkel erreicht. Es kommt daher für einen gegebenen Hub des Linearantriebs eine Gurtstraffung über eine relativ große Gurtbandlänge zustande. Dies ist besonders dann günstig, wenn der Linearantrieb von einem Fahrzeugteil abgeleitet wird, das bei einem Fahrzeugaufprall eine Verlagerung relativ zu der als starr angenommenen Fahrgastzelle erfährt. Die Bewegung dieses Fahrzeugteils kann mittels eines Zugseils auf die Antriebsplatte übertragen werden. Bereits eine geringe Verlagerung dieses Fahrzeugteils führt dann zu der erwünschten Gurtstraffung.

Eine besonders vorteilhafte Weiterbildung des Gurtstraffers besteht darin, daß nach erfolgter Gurtstraffung die Haspel durch eine Rücklaufbremse in ihrer Rückdrehung gehemmt ist. Vorzugsweise ist die Bremskraft dieser Rücklaufbremse für eine Belastungsspitzen abbauende Energiewandlung dimensioniert. Eine solche, zur Energiewandlung geeignete Rücklaufbremse kann mit wenigen, kostengünstigen und leicht zu montierenden Bauteilen erreicht werden, indem ein am Gehäuse drehfest gehaltener Torsionsstab durch die Relativbewegung zwischen Gehäuse und Antriebsplatte plastisch verformt wird. Auf diesem Torsionsstab ist ein Zahnrad mittels einer Freilaufkupplung gelagert. Das Zahnrad greift formschlüssig in eine an der Antriebsplatte angeordnete Verzahnung, so daß nach erfolgter Gurtstraffung eine Rückdrehung der Haspel in Gurtabzugsrichtung nur unter Torsion und entsprechender plastischer Verformung des Torsionsstabes stattfinden kann.

Weitere Merkmale und Vorteile der Erfindung ergeben sich aus der folgenden Beschreibung einer vorteilhaften Ausführungsform und aus der Zeichnung, auf die Bezug genommen wird. In der Zeichnung zeigen:
- Fig. 1: eine schematische Perspektivansicht wesentlicher Teile eines Sicherheitsgurt-Rückhaltesystems mit einem erfindungsgemäßen Gurtstraffer;
- Fig. 2: eine schematische Seitenansicht des in Fig. 1 gezeigten Gurtstraffers;
- Fig. 3: eine schematische Endansicht des Gurtstraffers; und

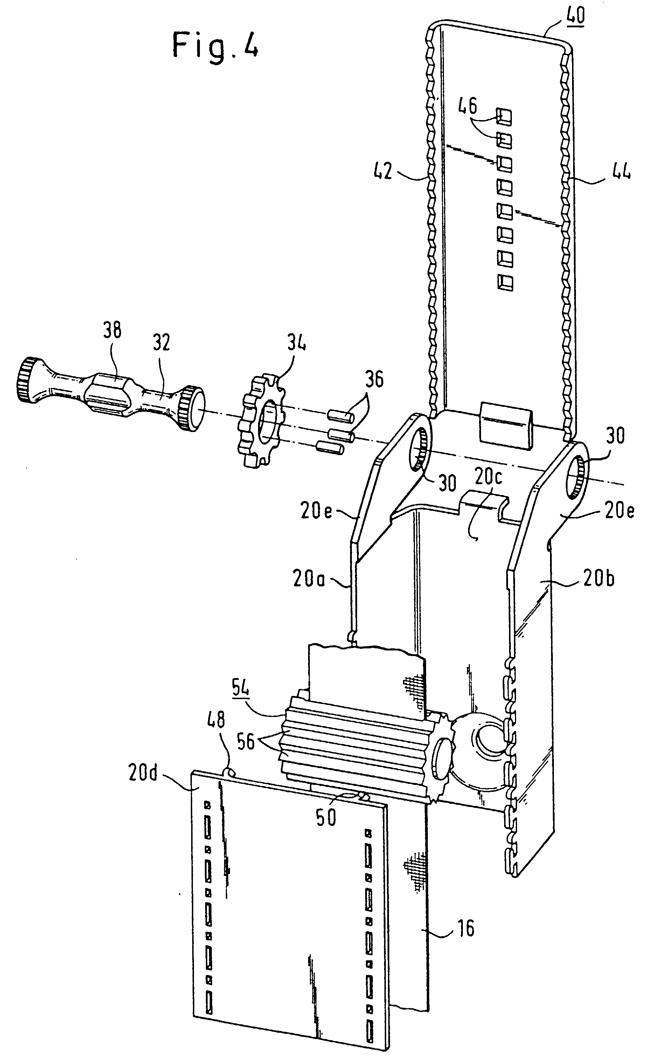

- Fig. 4: eine auseinandergezogene Perspektivansicht des Gurtstraffers.

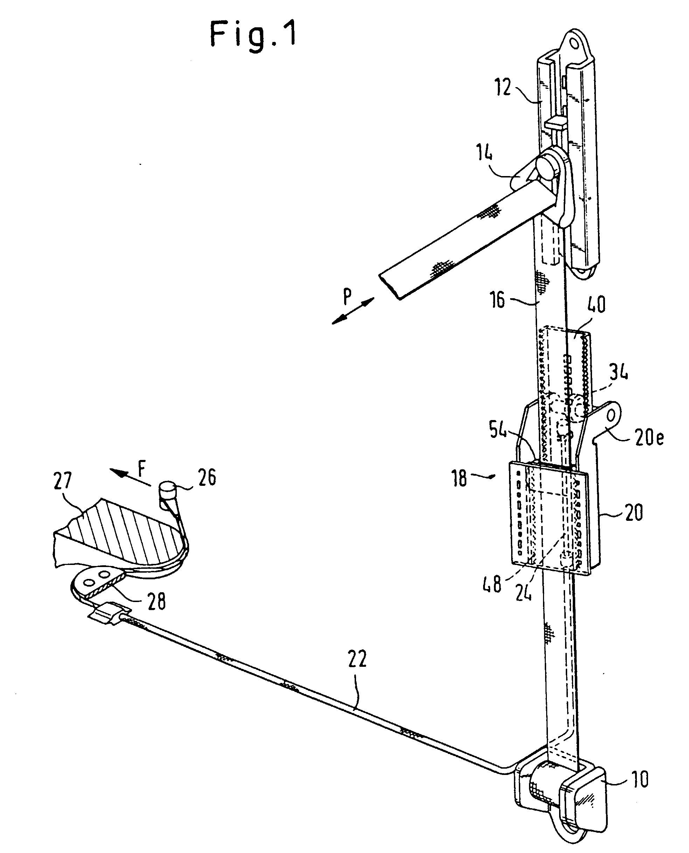

Das in Fig. 1 gezeigte Sicherheitsgurt-Rückhaltesystem für Fahrzeuginsassen ist in herkömmlicher Weise mit einem Gurtaufroller 10 und einem Höhenversteller 12 für einen Umlenkbeschlag 14 versehen, der dieses zum Oberkörper eines Fahrzeuginsassen hin umlenkt. An dem annähernd senkrecht zwischen dem Gurtaufroller 10 und dem Höhenversteller 12 verlaufenden Gurtbandabschnitt ist ein Gurtstraffer 18 angeordnet. Ein lasttragendes Gehäuse 20 dieses Gurtstraffers 18 ist am Fahrzeugaufbau starr befestigt. Ein Seilzug mit einem äußeren Mantel 22 und einem inneren Zugkabel 24 erstreckt sich zwischen dem Gurtstraffer 18 und einem Verankerungspunkt 26 am Fahrzeugaufbau; in der Nähe dieses Verankerungspunktes 26 ist das Zugseil 24 um ein Fahrzeugteil 27 teilweise herumgeführt sowie über ein Umlenkelement 28 um etwa 180° umgelenkt. Die Fahrtrichtung ist in Fig. 1 durch einen Pfeil F angedeutet. Die Gurtband-Abzugsrichtung und die Gurtband-Aufrollrichtung sind in Fig. 1 durch einen Doppelpfeil P angedeutet.

Bis auf den nun im einzelnen zu beschreibenden Gurtstraffer ist das Sicherheitsgurt-Rückhaltesystem von herkömmlicher Ausbildung und wird daher nicht weiter erläutert.

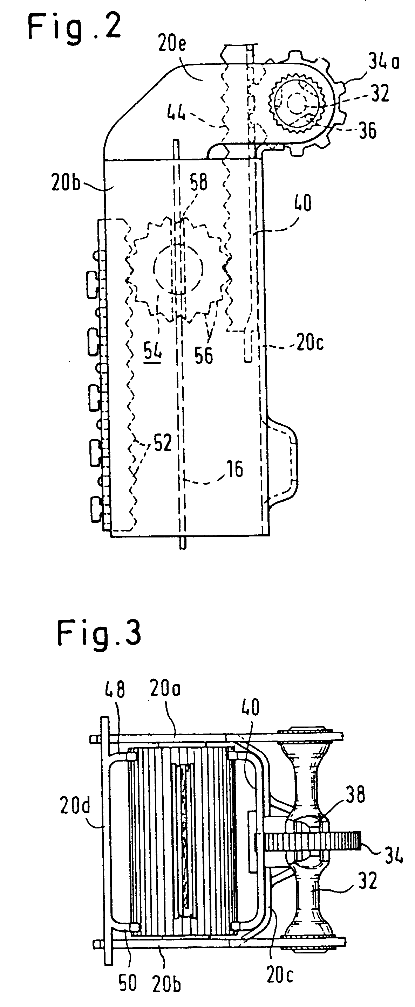

Das lasttragende Gehäuse 20 des Gurtstraffers 18 besteht aus einem U-förmig gebogenen Hauptteil mit zwei Seitenwänden 20a, 20b und einer Bodenwand 20c. Durch eine mit den freien Enden der Seitenwände 20a, 20b verbundene Deckelplatte 20d ist das Gehäuse auf seiner der Bodenwand 20c gegenüberliegenden Seite geschlossen. Die symmetrisch ausgebildeten Seitenwände 20a, 20b sind mit jeweils einem Ausleger 20e versehen, der sich bis über die Rückseite der Bodenwand 20c hinaus erstreckt. Jeder der Ausleger 20e ist mit einer gerändelten Öffnung 30 versehen, in die jeweils ein Ende eines Torsionsstabes 32 drehfest und formschlüssig eingesetzt ist. Auf diesem Torsionsstab 32 ist ein Zahnrad 34 mittels einer Freilaufkupplung gelagert. Diese Freilaufkupplung ist, wie am besten aus Fig. 2 ersichtlich, durch ein Wälzkörper-Gesperre gebildet, dessen Wälzkörper 36 in rampenartigen Ausnehmungen eines Lagerkörpers 38 in der Mitte des Torsionsstabes 32 angeordnet sind. Die Wälzkörper 36 sind von der zylindrischen Innenwandung einer Bohrung des Zahnrades 34 umgeben.

Entlang der Bodenwand 20c des Gehäuses 20 verschiebbar angeordnet ist eine Antriebsplatte 40, die an ihren beiden Seitenrändern je eine Verzahnung 42 bzw. 44 trägt. Entlang ihrer Mittellinie ist die Antriebsplatte 40 mit einer Reihe von Öffnungen 46 versehen, die eine weitere Verzahnung bilden, welche passend zu der Verzahnung am Außenumfang des Zahnrades 34 ausgebildet ist. Wie besonders deutlich aus Fig. 2 ersichtlich ist, stehen die Zähne 34a des Zahnrades 34 mit dieser durch die Öffnungen 46 gebildeten Verzahnung der Antriebsplatte 40 in Eingriff.

Die Deckelplatte 20d ist auf ihrer der Bodenwand 20c zugewandten Seite mit zwei parallelen Rippen 48, 50 versehen, die je eine Zahnleiste mit einer Verzahnung 52 bilden, die den Verzahnungen 42, 44 entspricht. Zwischen diesen Verzahnungen 52 einerseits sowie den Verzahnungen 42, 44 andererseits ist eine walzenförmige Haspel 54, die an ihrem Außenumfang mit einer Verzahnung 56 versehen ist, lose sowie in Kämmeingriff mit diesen Verzahnungen angeordnet. Die Haspel 54 ist mit einem diametral durchführenden Schlitz für den Durchgang des Gurtbandes 16 versehen.

Das Zugseil 24 ist, wie aus Fig. 1 ersichtlich, an der Antriebsplatte 40 angeschlossen. Die Außenhülle 22 des Seilzuges ist an dem Gehäuse 20 abgestützt. Dieser Seilzug bildet mit dem Befestigungspunkt 26, dem Umlenkelement 28 und dem Fahrzeugteil 27, das von dem Zugseil 24 teilweise umschlungen wird, einen Linearantrieb für den Gurtstraffer.

Bei einem Fahrzeugaufprall wird das Fahrzeugteil 27 relativ zum Befestigungspunkt 26 entgegen der Richtung des Pfeils F verlagert. Es entsteht daher ein Zug am Zugseil 24. Dieser Zug wird auf die Antriebsplatte 40 übertragen. Die Antriebsplatte 40 bewegt sich daher entlang der Bodenwand 20c in Richtung der Zugausübung. Da die Haspel 54 über ihre Verzahnung 56 in Kämmeingriff mit den Verzahnungen 42, 44 der Antriebsplatte 40 steht, wird sie in Drehung versetzt. Da sie aber zugleich mit den Verzahnungen 52 entlang den Rippen 48, 50 der Deckelplatte 20d in Kämmeingriff steht, wird sie entlang diesen Verzahnungen 52 abgewälzt. Sie bewegt sich also entlang diesen Verzahnungen 52 abwärts. Zugleich wird das Gurtband 16 auf ihrem Umfang aufgewickelt. Durch das Aufwickeln des Gurtbandes 16 auf dem Umfang der Haspel 54 wird der Gurtbandabschnitt zwischen Gurtstraffer 18 und dem Verankerungspunkt des Gurtbandes am Fahrzeugboden oder Fahrzeugsitz verkürzt. Dies ist die angestrebte Straffung des Gurtbandes. Die durch das Wälzkörper-Klemmgesperre mit den Wälzkörpern 36 gebildete Freilaufkupplung läßt eine freie Drehung des Zahnrades 34 während der Bewegung der Antriebsplatte 40 nach unten zu. Die Abwärtsbewegung der Antriebsplatte 40 wird also durch das frei mitlaufende Zahnrad 34 nicht behindert.

Nach beendeter Gurtstraffung wird diese Freilaufkupplung aber durch den nunmehr im Gurtbandsystem vorhandenen Zug, der bestrebt ist, die Haspel 54 zurückzudrehen, umgesteuert. Die Rückdrehung der Haspel wird nun gehemmt, da sie nur möglich ist, wenn die Antriebsplatte 40 ihrerseits eine Verschiebung entlang der Bodenwand 20c des Gehäuses 20 in Aufwärtsrichtung ausführt. Diese Aufwärtsbewegung der Antriebsplatte 40 wird aber über das Zahnrad 34, die nunmehr sperrende Freilaufkupplung und den Torsionsstab 32 behindert, der drehfest zwischen den Auslegern 20e des Gehäuses 20 gehalten ist. Eine weitere Verschiebung der Antriebsplatte 40 ist nur möglich, wenn der Torsionsstab 32 eine Torsion erfährt. Mit dieser Torsion geht eine plastische Verformung einher, so daß eine Energiewandlung stattfindet. Diese Energiewandlung ist hoch erwünscht, da sie einen Abbau von Belastungsspitzen im Gurtbandsystem bewirkt. Bei geeigneter Wahl des Materials, aus dem der Torsionsstab 32 gebildet ist, kann eine Drehung des Zahnrades 34, und mit diesem des mittleren Lagerkörpers 38 des Torsionsstabes, um mehr als 360° stattfinden. Dies entspricht einer nahezu vollständigen Rückdrehung der Haspel 54 in ihre Ausgangslage. Eine weitere Energiewandlung findet anschließend durch Straffung des Gurtbandwickels auf dem Gurtaufroller 10 statt.

Bei der beschriebenen Ausführungsform ist der Linearantrieb des Gurtstraffers von dem Fahrzeugteil 27 abgeleitet, welches sich bei einem Fahrzeugaufprall relativ zu der starren Fahrgastzelle des Fahrzeugs verlagert.

Bei einer anderen, nicht näher beschriebenen Ausführungsform ist der Linearantrieb des Gurtstraffers durch einen pyrotechnischen Kolben/Zylinder-Antrieb gebildet, der zwischen dem Gehäuse 20 und der Antriebsplatte 40 wirksam wird. Ein solcher pyrotechnischer Linearantrieb benötigt nur wenig Bauraum und kann leicht mit der gezeigten Bauform des Gurtstraffers zu einer Baugruppe integriert werden.

## Patentansprüche

1. Gurtstraffer in einem Rückhaltesystem für Fahrzeuginsassen, mit einer einen Schlitz (58) für den Durchgang des Gurtbandes (16) aufweisenden Haspel (54), die an ihrem Außenumfang mit einer Verzahnung (56) versehen ist, und einem am Fahrzeugaufbau befestigbaren Gehäuse (20), das eine erste Wand (20d) mit einer Verzahnung (52) aufweist, entlang welcher die Verzahnung (56) der Haspel (54) formschlüssig abwälzbar ist, und einem Linearantrieb, der durch einen Aufprall des Fahrzeugs aktivierbar ist und dessen Linearbewegung in eine Drehbewegung der Haspel (54) umgesetzt wird, dadurch gekennzeichnet, daß entlang einer zweiten, zur ersten (20d) parallelen und von ihr beabstandeten Wand (20c) des Gehäuses (20) eine Antriebsplatte (40) verschiebbar angeordnet ist, die auf ihrer der Haspel (54) zugekehrten Seite eine Verzahnung (42, 44) aufweist, mit der die Verzahnung der Haspel (54) formschlüssig in Eingriff steht, daß der Linearantrieb an der Antriebsplatte (40) angreift und daß die allgemein walzenförmige Haspel (54) lose zwischen den Verzahnungen (42, 44, 52) der ersten und der zweiten Wand (20d, 20c) und in Kämmeingriff mit diesen im Gehäuses (20) angeordnet ist.

2. Gurtstraffer nach Anspruch 1, dadurch gekennzeichnet, daß die Haspel (54) nach erfolgter Gurtstraffung durch eine Rücklaufbremse in ihrer Rückdrehung gehemmt ist.

3. Gurtstraffer nach Anspruch 2, dadurch gekennzeichnet, daß die Bremskraft der Rücklaufbremse für eine Belastungsspitzen abbauende Energiewandlung dimensioniert ist.

4. Gurtstraffer nach Anspruch 2 oder 3, dadurch gekennzeichnet, daß die Rücklaufbremse aufweist:
einen am Gehäuse drehfest gehaltenen Stab (32);
ein auf dem Stab (32) mittels einer Freilaufkupplung (36) gelagertes Zahnrad (34); und
eine an der Antriebsplatte (40) angeordnete Verzahnung (46), mit der das Zahnrad (34) formschlüssig in Eingriff steht.

5. Gurtstraffer nach Anspruch 4, dadurch gekennzeichnet, daß der Stab (32) als Torsionsstab ausgebildet ist.

6. Gurtstraffer nach Anspruch 4 oder 5, dadurch gekennzeichnet, daß die Freilaufkupplung durch ein Wälzkörper-Gesperre (36) gebildet ist.

7. Gurtstraffer nach einem der vorstehenden Ansprüche, dadurch gekennzeichnet, daß der Linearantrieb von einem sich beim Fahrzeugaufprall relativ zum Fahrzeugaufbau verlagernden Fahrzeugteil (27) mittels eines dieses teilweise umschlingenden Seils (24), das an der Antriebsplatte (40) angeschlossen ist, abgeleitet ist.

8. Gurtstraffer nach einem der vorstehenden Ansprüche, dadurch gekennzeichnet, daß der Linearantrieb durch einen zwischen Gehäuse (20) und Antriebsplatte (40) wirkenden pyrotechnischen Kolben/Zylinder-Antrieb gebildet ist.

## Claims

1. Belt tightener in a restraining system for vehicle occupants comprising a reel (54) which has a slot (58) for the passage of the webbing (16) and which is provided at its outer periphery with a toothing (56), and a housing (20) which is adapted to be mounted on the vehicle bodywork and which comprises a first wall (20d) having a toothing (52) along which the toothing (56) of the reel (54) can roll in form-locking manner, and a linear drive which is activatable by a collision of the vehicle and the linear movement of which is converted to a rotary movement of the reel (54), characterized in that along a second wall (20c) of the housing (20) parallel to the first (20d) and spaced therefrom a drive plate (40) is displaceably arranged and comprises on its side facing the reel (54) a toothing (42, 44) with which the toothing of the reel (54) is in form-locking engagement, that the linear drive engages the drive plate (40), and that the generally roll-shaped reel (54) is arranged in the housing (20) loosely between the toothings (42, 44, 52) of the first and second wall (20d, 20c) in meshing engagement with the toothings.

2. Belt tightener according to claim 1, characterized in that the reel (54) after the belt tightening is inhibited in its return rotation by a return brake.

3. Belt tightener according to claim 2, characterized in that the braking force of the return brake is dimensioned for an energy conversion diminishing load peaks.

4. Belt tightener according to claim 2 or 3, characterized in that the return brake comprises:
a rod (32) held non-rotatably on the housing;
a gear (34) mounted on the rod (32) by means of an overrunning clutch (36); and
a toothing (46) which is arranged on the drive plate (40) and with which the gear (34) is in form-locking engagement.

5. Belt tightener according to claim 4, characterized in that the bar (32) is constructed as torsion bar.

6. Belt tightener according to claim 4 or 5, characterized in that the overrunning clutch is formed by a roller body blocking mechanism (36).

7. Belt tightener according to any one of the preceding claims, characterized in that the linear drive is derived from a vehicle component (27) moving relatively to the vehicle bodywork in a vehicle collision, by means of a cable (24) which partially surrounds said component (27) and which is connected to the drive plate (40).

8. Belt tightener according to any one of the preceding claims, characterized in that the linear drive is formed by a pyrotechnical piston/cylinder drive effective between the housing (20) and the drive plate (40).

## Revendications

1. Tendeur de ceinture dans un système de retenue pour les passagers d'un véhicule, comportant un tambour (54), présentant une fente (58) pour le passage de la sangle (16), qui est pourvu d'une denture (56) à sa périphérie, et un boîtier (20) pouvant être fixé au châssis du véhicule, qui présente une première paroi (20d) pourvue d'une denture (52) le long de laquelle la denture (56) du tambour (54) peut s'engrener positivement, et un mécanisme d'entraînement linéaire qui peut être actionné par une collision du véhicule et dont le mouvement linéaire est transformé en un mouvement de rotation du tambour (54), caractérisé en ce qu'une plaque d'entraînement (40) est disposée de manière à pouvoir coulisser le long d'une seconde paroi (20c) du boîtier (20) parallèle à la première paroi (20d) et maintenue à une certaine distance de celle-ci, et présente sur son côté tourné vers le tambour (54) une denture (42, 44) avec laquelle la denture du tambour (54) se trouve positivement en prise, et en ce que le mécanisme d'entraînement linéaire vient en prise sur la plaque d'entraînement (40) et en ce que le tambour (54), qui a en général une forme cylindrique, est disposé avec du jeu entre les dentures (42, 44, 52) de la première et de la seconde paroi (20d, 20c) et est engréné avec celles-ci dans le boîtier (20).

2. Tendeur de ceinture suivant la revendication 1 ou 2, caractérisé en ce qu'un frein de retour empêche le tambour (54) de tourner en arrière après que la ceinture a été tendue.

3. Tendeur de ceinture suivant la revendication 3, caractérisé en ce que la force de freinage du frein de retour est dimensionnée pour une conversion d'énergie écrétant les pointes de charge.

4. Tendeur de ceinture suivant la revendication 2 ou 3, caractérisé en ce que le frein de retour présente :
une barrette (32) maintenue sans pouvoir tourner sur le boîtier ;
une roue dentée (34) montée sur la barrette (32) au moyen d'un accouplement à roue libre (36) ; et
une denture (46), disposée sur la plaque d'entraînement (40), avec laquelle la roue dentée (34) s'engrène positivement.

5. Tendeur de ceinture suivant la revendication 4, caractérisé en ce que la barrette (32) est réalisée sous la forme d'une barre de torsion.

6. Tendeur de ceinture suivant la revendication 4 ou 5, caractérisé en ce que l'accouplement à roue libre est formé par un encliquetage à cylindres (36).

7. Tendeur de ceinture suivant l'une des revendications précédentes, caractérisé en ce que le mécanisme d'entraînement linéaire est dérivé d'une partie (27) du véhicule se déportant par rapport au châssis du véhicule lors d'une collision de ce dernier, au moyen d'un câble (24) qui s'enroule partiellement autour de cette partie et qui est relié à la plaque d'entraînement (40).

8. Tendeur de ceinture suivant l'une des revendications précédentes, caractérisé en ce que le mécanisme d'entraînement linéaire est formé par un mécanisme d'entraînement pyrotechnique à piston et cylindre agissant entre le boîtier (20) et la plaque d'entraînement (40).
